# EUROPEAN PATENT APPLICATION

(11) **EP 0 860 629 A2**
(43) Date of publication of application: **26.08.1998**
(21) Application number: 98100979.8
(22) Date of filing: 21.01.1998
(51) Int. Cl.: F16H 57/04

(54) **Mechanical speed variator**

(30) Priority: 21.02.1997 IT MI970374
(71) Applicant: Motovario S.p.A., 40033 Casalecchio di Reno (BO) (IT)
(72) Inventor: Coroluppi, Walther, 40012 Calderara Di Reno (BO) (IT)
(74) Representative: La Ciura, Salvatore

(57) **Abstract**

The present invention proposes a mechanical speed variator, where means are provided suitable to centrifugate the arriving oil in order to take it away from the area of tightness.

Said means consist of a ring (13) integral with the shaft (2) of the variator, said ring (13) being located so that it does not interfere with the path of the oil towards the area of tightness, said ring (13) being assembled on the input shaft (2) or on means (3) integral with said input shaft (2).

## Description

The present invention proposes a mechanical speed variator, for instance of the satellite type, where means are provided suitable to improve the tightness conditions of the lubricating oil in correspondence of the oil retainer ring, on the side of the connection to an electric motor. More in particular, a ring is provided, integral with the entry shaft of the variator and therefore rotating with the latter, ring that is therefore located in correspondence of the area where the lubricating oil goes and that acts on said oil in order to take it away from the shaft, avoiding in this way losses and blow-by.

Many types of speed variators are known, for instance speed variators of the satellite type, and one of these is described in the Italian application MI95U 0684 of the requester itself.

These variators include an entry shaft connected to a motor, that rotates at a constant speed and, through a satellite system, transmits the motion to an exit shaft.

The kinematic mechanism that connects the entry shaft to the exit shaft is already known, and there is no need to explain it in details.

Inside the variator there is a discrete quantity of oil destined to assure the lubrication of the mobile parts for a good working of the device and, on the entry and exit shafts, oil retainer rings are provided suitable to assure the tightness between the shaft and the body of the variator, in order to avoid losses and blow-by of the lubricant.

Notwithstanding the presence of these devices, with the passing of time light losses equally occur that and provoke a number of inconveniences, as for instance the concentration of dust and dirt in the areas where the oil goes out, and can also cause, if they are in great quantity, damages to the variator.

These losses are due to an aggregate of causes that cannot practically be avoided.

For instance, possible very little differences in the thickness between one satellite and the other cause, during the revolution motion of the latter around the variator shaft, micro-movements in axial direction of the sliding tracks.

The same effects can be caused also by errors or possible inaccuracies in the construction of the several components.

To these, also causes due to a possible defective coupling between the connection shaft to the motor and the related hole present on the satellite tracks could be added, as for instance concentricity errors of the shaft with reference to the theoretic rotation axis, perpendicularity errors of the shaft with reference to the plane of the track and possible very small eccentricity of the shaft itself.

The above mentioned errors and anomalies weigh negatively upon the tightness conditions, allowing that the oil, directly in touch with the lip of the oil retainer ring, goes out continuously, even though in very small quantities, helping in this way the accumulation of dust and dirt in correspondence of the blow-by areas and causing also, if they are in great quantity, the damages to the variator.

It is known that the optimal tightness conditions of an oil retainer ring are obtained when a perfect perpendicularity of the lip with respect to the rotation axis occurs, when there is a perfect adhesion of this shaft to the shaft surface and when no reciprocal movement happens between the surface of that shaft and the tightness ring.

Purpose of the invention is to realize an improved variator, where these inconveniences are removed and that assures a perfect oil tightness in any condition.

To this purpose, according to the invention, the installing of a ring is provided on the entry shaft in correspondence of the course of the oil and this ring acts on the oil with centrifugal effect, in order to take it away from the critical tightness area.

This system achieves also a second purpose, allowing to protect the tightness lip from the suspended impurities present in the lubricating oil. These and other characteristics shall be clearly detailed in the following description, provided as a non imitative example, with reference to the enclosed figures, where:

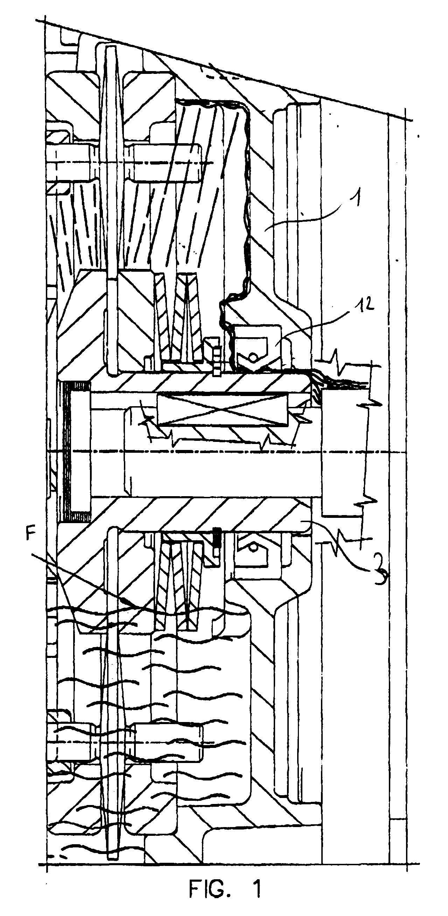

- figure 1 shows, in section along a plane passing for the axis of the entry shaft, a mechanical variator realized according to a known technique;

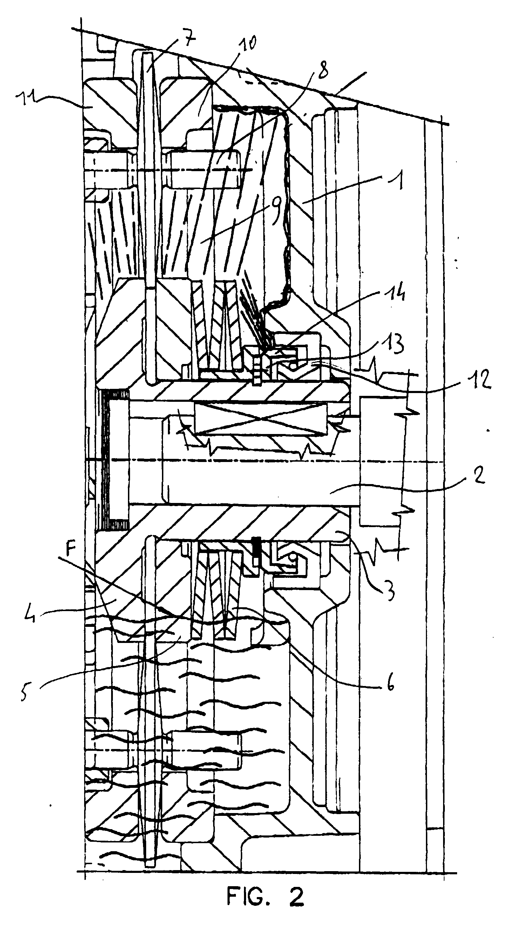

- figure 2 is the corresponding section of a mechanical variator improved according to the invention.

With reference to the enclosed figures, with number 1 the body of the speed variator is shown, where an entry shaft 2 is installed, connected to working means as an electric motor, not shown in the figure.

To the shaft 2 a sleeve 3 is splined, that terminates with a flange 4, and on this sleeve an annular plate 5 is assembled, that a packet of springs 6 or similar presses against flange 4.

Between the flange 4 and the mobile plate 5 a plurality of satellite 7 are interposed, each of them consisting of a discoid element provided with a shaft 8 that can slide inside a slot 9 obtained in the spider.

The satellites 7 are therefore tightened at the inner side in the track formed by the plate 5 and the flange 4, while, on the outer side, are lead into a second track delimited by opposite rings, at an adjustable and varying distance, 10 and 11.

In their revolution motion the satellites transmit on their turn the motion to the exit shaft.

All these kinematic movements are already known and are shown as an example in the above mentioned patent application, which it is referred to for more details.

In the variator a certain quantity of oil is present, the level of which is shown by arrow F and which during the movement of the various components is put in stream and lubricates all mobile parts.

Because of the beating, the oil is thrown against the walls of the case 1 and goes down along them, following the course shown in bold in the figures, in order to reach the correspondence of an oil retainer ring 12 that is installed in the case 1, in order to assure the tightness in correspondence of the surface of the sleeve 3, installed on the shaft 2.

However, because of the construction and coupling defects already mentioned before, a certain quantity of oil, even though a very little quantity, draws continuously through these tightnesses and cumulates on the sleeve surface and on the case of the variator, always near the entry of the motor shaft.

In order to avoid this, according to the invention, an element is provided to be installed on the entry shaft, with the purpose to centrifugate the oil in order to take it away from this area.

According to a preferred version of the invention, this element is formed by a ring 13 that preferably presents an edge 14 folded at 90°, so that it can be inserted inside the oil retainer ring 12.

The ring 13 is assembled integrally on the sleeve 3, so that it rotates at a high number of revolutions, together with the latter.

The oil arriving along the wall of the case of the variator, falls then on this ring and, because of the centrifugal strength due to the high rotating speed of the latter, is centrifugated, that is it is thrown or taken away in radial direction, avoiding in this way that it can reach the correspondence of the tightness area between the oil retainer ring 12 and the sleeve 3.

With this system, on the oil retainer ring only very little quantities of lubricant arrive, which although they can assure anyway a good lubrication of the area, are such that do not cause blow-by or inconveniences of any kind, while most oil that reaches the shaft is put in stream again inside the variator.

The presence of the ring 13, that acts as a centrifugal element on the oil, is useful also for the protection of the gaskets of ring 13 from the impurities present in the oil, impurities consisting for instance of mechanical particles that are created by the action of the metallic surfaces in reciprocal sliding.

These particles, having a specific mass greater than the mass of the oil, are subject to a greater centrifugal strength and are therefore thrown towards the peripheral part of the variator without reaching the area of tightness.

In this way, an improved mechanical speed variator is achieved, where the oil losses can be completely removed, decreasing the risks of failure of the device and avoiding the inconveniences deriving from the accumulation of oil and dust near the areas of tightness.

The ring 13 that has the purpose to centrifugate the oil taking it away from the entry shaft could assume different configurations, without for this reason being outside the scope of protection of this invention.

So, this ring could have a smooth surface or a rough surface or relief elements suitable to impress a greater speed to the oil that is taken away, it could be straight or bent and so on.

An expert of the art could also provide different other modifications and variations that should however be all included in the scope of this invention

## Claims

1. Mechanical speed variator characterized by the fact that it provides near the area of tightness means suitable to centrifugate the arriving oil in order to take it away from said area of tightness.

2. Speed variator according to claim 1 characterized by the fact that said means are consist of a ring integral with the shaft of the variator, said ring being located in such a way that it does not interfere with the course of the oil towards the area of tightness.

3. Speed variator according to claim 2 characterized by the fact that said ring is installed on the entry shaft or on means integral with said entry shaft.

4. Mechanical speed variator according to the previous claims characterized by the fact that said ring has the outer edge folded, in particular folded at 90°, so that said ring has an L section.

5. Speed variator according to claim 4 characterized by the fact that the edge of said ring is inserted inside the oil retainer ring, between the body and the lip of this latter.

6. Speed variator according to the previous claims characterized by the fact that said ring presents a wrinkled outer surface or anyway a surface provided with relief elements suitable to increase the centrifugal action exerted on the oil.

7. Mechanical speed variator with means suitable to exert a centrifugal action on the oil in order to take it away from the area of tightness as described and shown.
